Europäisches Patentamt

European Patent Office

Office européen des brevets

(11) Publication number: **0 237 308 B1**

# EUROPEAN PATENT SPECIFICATION

(45) Date of publication of patent specification: **26.08.92**   (51) Int. Cl.⁵: **H02J  7/35**, H02J 7/34

(21) Application number: **87302002.8**

(22) Date of filing: **09.03.87**

(54) **Capacitor charging circuit.**

(30) Priority: **10.03.86 JP 51659/86**

(43) Date of publication of application:
**16.09.87 Bulletin  87/38**

(45) Publication of the grant of the patent:
**26.08.92 Bulletin  92/35**

(84) Designated Contracting States:
**CH DE FR GB LI**

(56) References cited:
**DE-A- 3 239 432**
**GB-A- 2 149 942**
**US-A- 3 240 958**
**US-A- 4 667 142**

(73) Proprietor: **SEIKO INSTRUMENTS INC.**
**31-1, Kameido 6-chome Koto-ku**
**Tokyo 136(JP)**

(72) Inventor: **Inoue, Yuichi c/o SEIKO INSTRU-**
**MENTS INC.**
**31-1, Kameido, 6-chome**
**Koto-ku Tokyo(JP)**
Inventor: **Otawa, Shuji c/o SEIKO INSTRU-**
**MENTS INC.**
**31-1, Kameido, 6-chome**
**Koto-ku Tokyo(JP)**

Inventor: **Ochiai, Hitoshi c/o SEIKO INSTRU-**
**MENTS INC.**
**31-1, Kameido, 6-chome**
**Koto-ku Tokyo(JP)**
Inventor: **Kiyono, Yoshihiko c/o SEIKO IN-**
**STRUMENTS INC.**
**31-1, Kameido, 6-chome**
**Koto-ku Tokyo(JP)**
Inventor: **Nakamura, Chiaki c/o SEIKO IN-**
**STRUMENTS INC.**
**31-1, Kameido, 6-chome**
**Koto-ku Tokyo(JP)**

(74) Representative: **Miller, Joseph et al**
**J. MILLER & CO. 34 Bedford Row, Holborn**
**London WC1R 4JH(GB)**

EP 0 237 308 B1

## Description

This invention relates to capacitor charging circuits for charging capacitors of an electronic device which is powered by electric charge produced by a solar cell and stored in a capacitor.

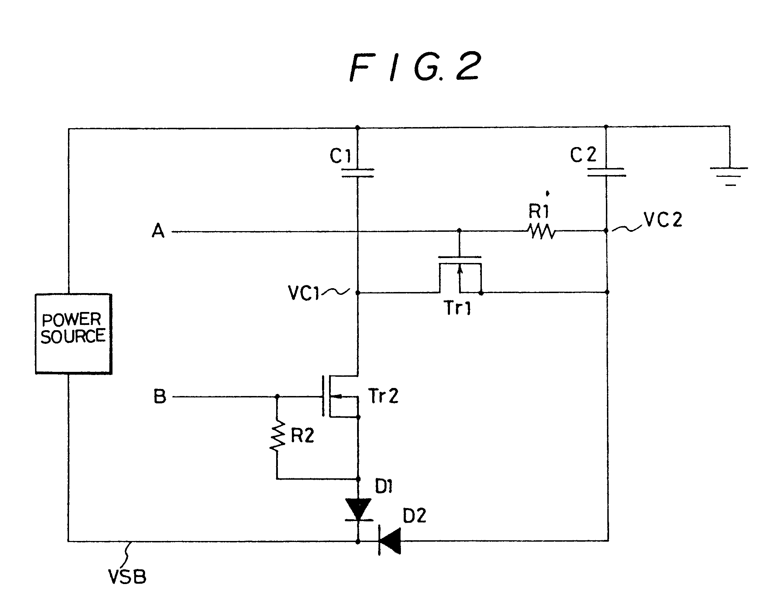

Figure 2 illustrates a conventional capacitor charging circuit. A first resistor R1 and second reistor R2 are connected to anodes of a first diode D1 and second diode D2, respectively.

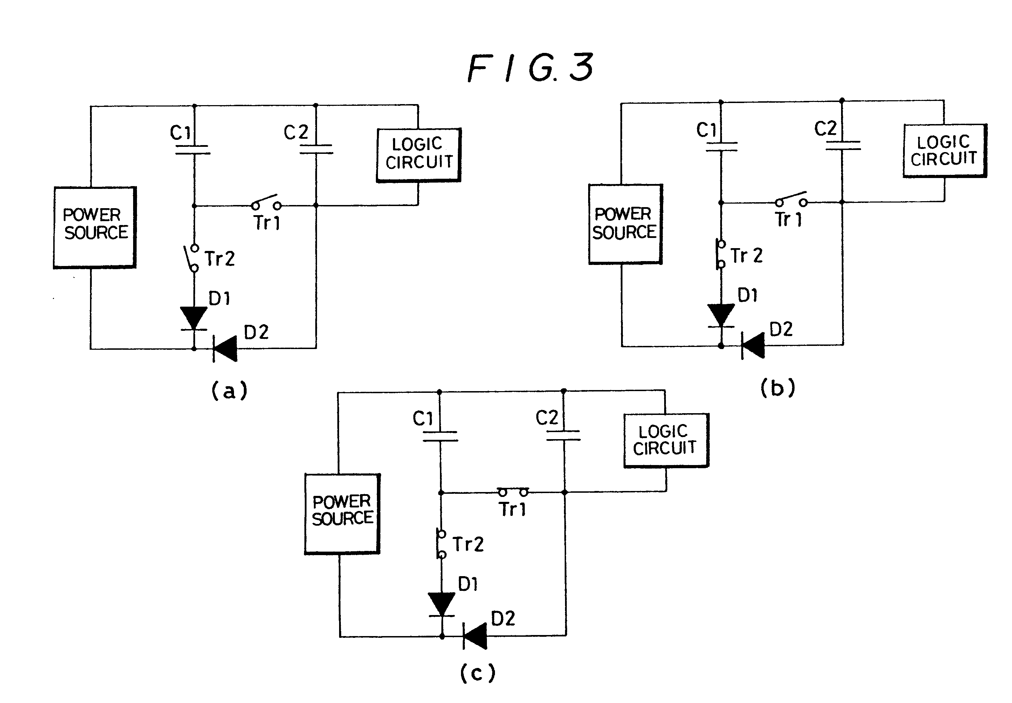

The operation of this conventional capacitor charging circuit will now be described with reference to Figure 3. The capacitor charging circuit is used in an electronic device eg an electronic timepiece which does not have a rechargeable cell but a capacitor C1 having a relatively large capacitance and a capacitor C2 having a relatively small capacitance, connected to one terminal of a power source. Switching elements Tr1, Tr2 are turned on or off by logic signals A, B from a logic circuit (not shown). The power source consists of solar cells, a generator or an external power source. In the following description the power source is assumed to be solar cells for ease of explanation.

In an initial state, the switching elements Tr1, Tr2 of the capacitor charging circuit are turned off when the solar cells are irradiated with light, the voltages on the capacitors C1, C2 are low and the electronic device is not functioning. Current generated by the power source flows into the capacitor C2 only to quickly raise its voltage, so that a logic circuit of the electronic device instantly operates and the electronic device functions. This condition is hereinafter referred to as the "quick start condition" and is illustrated in Figure 3(a). When the voltage on the capacitor C2 is low at the time of the quick start condition and the logic circuit is not operating, the logic signals A, B are not yet stabilised to control the switching elements Tr1, Tr2 . Therefore, the resistors R1, R2 are connected to the gates of the switching elements Tr1, Tr2 respectively as illustrated in Figure 2, to ensure that the switching elements are completely turned off.

As the logic circuit detects the fact that the voltage on the capacitor C2 has risen in excess of a predetermined voltage, the switching element Tr2 is turned on by the logic signal B, whereby the current from the solar cells flows into the capacitor C1 to charge it. Hereinafter, this condition is referred to as the "C1 charging condition". Figure 3-(b) illustrates the C1 charging condition. Under the C1 charging condition, almost all the current from the solar cells flows into the capacitor C1, and very little current flows into the capacitor C2. During this time, the logic circuit operates on the voltage of the capacitor C2. Therefore, the voltage on the capacitor C2 decreases gradually. As the logic circuit detects that the voltage of the capacitor C2 decreases below a predetermined voltage, the switching element Tr2 is turned off by the logic signal B, and the quick start condition is resumed. As the quick start condition is resumed, the capacitor C2 is quickly charged by the solar cells and the C1 charging condition is resumed. Thus the quick start condition represented by Figure 3(a) and the C1 charging condition represented by Figure 3(b) are alternately repeated, so that the voltage on the capacitor C1 rises gradually.

As the logic circuit detects the fact that the voltage on the capacitor C1 has risen to a value sufficient for operating the logic circuit, both the switching elements Tr1, Tr2 are turned on by the logic signals A, B. The condition in which both the switching elements Tr1, Tr2 are turned on, is referred to as the "C1 charge completion condition" which is illustrated in Figure 3(c).

Under the quick start condition and the C1 charging condition, the voltage on the capacitor C2 drops rapidly if the solar cells are no longer irradiated with light, and the electronic device ceases to function. Under the C1 charge completion condition, however, current is supplied from the capacitor C1 to the logic circuit, and the electronic device continues to function for several days.

In the conventional capacitor charging circuit, however, current flows through the resistors R1, R2 in the C1 charge completion condition. Since the current is supplied from the capacitors C1, C2 the duration of operation of the electronic device is correspondingly shortened.

The present invention seeks to provide a capacitor charging circuit in which electric current consumed by the circuit is reduced.

US-A-3,240,958 discloses a voltage doubler circuit including a capacitor charging circuit which comprises a power supplying means having two output terminals, two capacitor means for storing electric charge from the power supplying means, first switching means having a controllable input for connecting or disconnecting one terminal of one of the capacitor means from the power supplying means, and first resistor means connected to the input of the first switching means for setting the switching means to turn off and connected directly to one terminal of the power supplying means. The other capacitor means is connected through two diodes to the other terminal of the power supplying means and the other terminal of the one capacitor means is connected to between the two diodes.

According to the present invention there is provided a capacitor charging circuit comprising power supplying means having two output terminals, at least one main capacitor means for storing electric charge from the power supplying means, a starter capacitor means of smaller capacitance than the main capacitor means for storing electric charge from the power supplying means, the starter capacitor means being connected on one side through a diode to one output terminal of the power supplying means and on the other side to the other output terminal, the main capacitor means being connected on one side through first switching means and a diode to the one output terminal and on the other side to the other output terminal, the first switching means having an electrically controllable input for connecting or disconnecting the one side of the main capacitor means to or from the diode, first resistor means connected to the input of the first switching means for setting the switching means to turn off, second switching means connected between the one side of the main capacitor means and the one side of the starter capacitor means, the second switching means having an electrically controllable input for connecting or disconnecting the one sides of the capacitor means, a logic circuit operating on the voltage of the starter capacitor for applying logic signals to said inputs to turn the switching means on and off and second resistor means connected to the input of the second switching means for setting the switching means to turn off, characterized in that the first resistor means is connected directly to the one output terminal of the power supplying means, and in that the second resistor means is being connected directly to the one output terminal of the power supplying means.

The power supplying means may be solar cell means or a manually operated generator.

The first and/or second switching means may be a MOSFET.

The capacitor charging circuit may include logic circuit means for generating control signals for the inputs of the switching means, the logic circuit means, in operation, being energized by the capacitor means.

The invention is illustrated, merely by way of example, in the accompanying drawings, in which:-

Figure 1 is a circuit diagram of one embodiment of a capacitor charging circuit according to the present invention;

Figure 2 is a circuit diagram of a conventional capacitor charging circuit;

Figure 3, consisting of Figures 3(a), 3(b) and 3-(c), is a diagram illustrating the operation of the conventional capacitor charging circuit of Figure 2; and

Figure 4 is a circuit diagram of another embodiment of a capacitor charging circuit according to the present invention.

Throughout the drawings like parts have been designated by the same reference numerals.

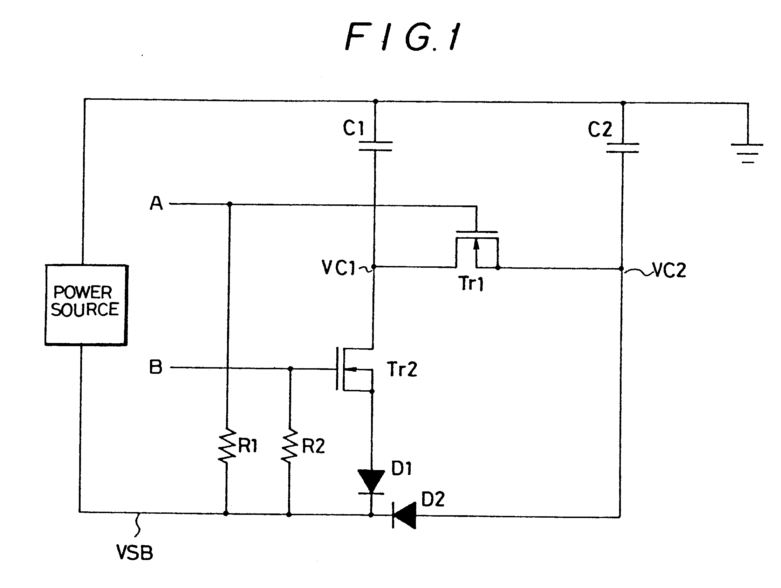

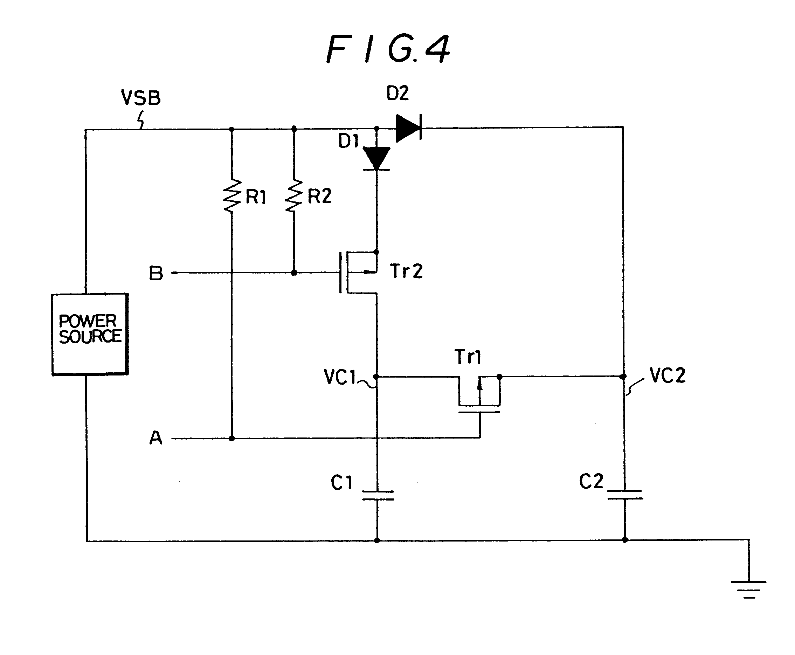

Figure 1 illustrates one embodiment of a capacitor charging circuit according to the present invention where a first terminal of the power source is grounded. Figure 4 illustrates another embodiment of a capacitor charging circuit according to the present invention where a second terminal of the power source is grounded. In Figures 1 and 4 the ground level of the power source is simply reversed, and the function and effect of the capacitor charging circuits of Figures 1 and 4 are the same. Moreover, the capacitor charging circuits of Figures 1 and 4 operate in the same manner as the conventional capacitor charging circuit of Figure 2.

Current supplied from the capacitors, C1, C2 to the resistors R1, R2 in the conventional capacitor charging circuit will be compared below with the corresponding current in the capacitor charging circuits of Figures 1 and 4.

In Figure 2, if voltages on the capacitors C1, C2 are denoted by VC1, VC2 respectively, and if the resistance of the switching element Tr2, when conductive, is denoted by RTr2, currents I1, I2 that flow into the resistors R1, R2 respectively under the C1 charge completion condition are given by:

$$I1 = \frac{VC2}{R1}$$

$$I2 = \frac{VC1}{R1 + RTr2}$$

In the capacitor charging circuit of Figure 1, current is not supplied from the capacitors C1, C2 to the resistors R1, R2, but is supplied from the power source to the resistors R1, R2. If the forward voltage drop of the diodes D1, D2 is denoted by VD1, VD2 respectively, current is supplied from the power source to the capacitors C1, C2, when the voltage VSB of the power source becomes greater than VC1 + VD1, VC2 + VD2 respectively. In this case, the current flowing into the capacitors C1, C2 decreases by the current that flows into the resistors R1, R2. Therefore, the current flowing into the resistors R1, R2 may be considered to be supplied from the capacitors C1, C2. In the capacitor charging circuits of Figures 1 and 4, therefore, although current is not supplied from the capacitors C1, C2 to the resistors R1, R2, the charging currents supplied from the power source to the capacitors C1, C2 is decreased by the resistors R1, R2. The amounts of reduction are:

$$I1 = K \times \frac{VC2 + VD2}{R1}$$

$$I2 = K \times \frac{VC1 + VD1}{R1 + RTr2}$$

where K is a factor related to the time for which the power source generates electricity. That is, when the power source consists of solar cells, the time for which the solar cells are irradiated with light is from about 8 to 16 hours a day. Therefore, K = 1/3 to 2/3. Further, when the power source is a manually operated generator, about 3 to 6 minutes are used to operate the generator a day and in this case, therefore, K = 1/480 to 2/240.

Next, the current I1, I2 will be compared below by substituting typical numeric values for the capacitor voltages VC1, VC2, for the forward voltage drop VD1, VD2 of the diodes, for the resistors R1, R2, for the resistance RTr2 of the switching element Tr2 when it is conductive, and for the factor K, namely:

VC1 = VC2 = 2.0    [V]

VD1 = VD2 = 0.6    [V]

R1 = R2 = 10    [megohm]

RTr2 = 1    [kilohm]

K = 1/2    (in the case of solar cells)

K = 1/320    (in the case of a manually operated generator)

In the case of the conventional capacitor charging circuit of Figure 2:

I1 + I2 = 0.40    [microA]

In the case of the capacitor charging circuits of Figures 1 and 4 when the power source is solar cells:

I1 + I2 = 0.26    [microA]

and when the power source is a manually operated generator:

I1 + I2 = 0.0016    [microA]

This shows that the total current I1 + I2 flowing through the resistors R1, R2 is 65% of the total current in the conventional capacitor charging circuit when solar cells are used, and is 0.41% when a manually operated generator is used.

In the capacitor charging circuits of Figure 1 and 4, the resistors R1, R2, consume a reduced current compared to the conventional capacitor charging circuit of Figure 2 and the duration of operation of the electronic device by the capacitors which are charged by solar cells or a manually operated generator is increased.

## Claims

1. A capacitor charging circuit comprising power supplying means having two output terminals, at least one main capacitor means (C1) for storing electric charge from the power supplying means, a starter capacitor means (C2) of smaller capacitance than the main capacitor means (C1) for storing electric charge from the power supplying means, the starter capacitor means (C2) being connected on one side through a diode (D2) to one output terminal of the power supplying means and on the other side to the other output terminal, the main capacitor means (C1) being connected on one side through first switching means (Tr2) and a diode (D1) to the one output terminal and on the other side to the other output terminal, the first switching means (Tr2) having an electrically controllable input for connecting or disconnecting the one side of the main capacitor means (C1) to or from the diode (D1), first resistor means (R2) connected to the input of the first switching means (Tr2) for setting the switching means (Tr2) to turn off, second switching means (Tr1) connected between the one side of the main capacitor means (C1) and the one side of the starter capacitor means (C2), the second switching means (Tr1) having an electrically controllable input for connecting or disconnecting the one sides of the capacitor means (C1, C2), a logic circuit operating on the voltage of the starter capacitor (C2) for applying logic signals to said inputs (A,B) to turn the switching means on and off and second resistor means (R1) connected to the input of the second switching means (Tr1) for setting the switching means (Tr1) to turn off, characterized in that the first resistor means (R2) is connected directly to the one output terminal of the power supplying means, and in that the second resistor means (R1) is being connected directly to the one output terminal of the power supplying means.

2. A circuit as claimed in claim 1, in which the power supplying means is solar cell means.

3. A circuit as claimed in claim 1, in which the power supplying means is a manually operated generator.

4. A circuit as claimed in any preceding claim in which the first switching means (Tr2) is a MOSFET.

5. A circuit as claimed in claim 1, in which the second switching means (Tr1) is a MOSFET.

**Patentansprüche**

1. Kondensatorladeschaltung, umfassend
   - eine Stromversorgungseinrichtung mit zwei Ausgangsanschlüssen,
   - wenigstens eine Hauptkondensatoreinrichtung (C1) zur Speicherung elektrischer Ladungen von der Stromversorgungseinrichtung,
   - eine elektrische Ladungen von der Stromversorgungseinrichtung speichernde Starterkondensatoreinrichtung (C2), deren Kapazität kleiner als die der Hauptkondensatoreinrichtung (C1) ist, wobei die Starterkondensatoreinrichtung (C2) auf einer Seite über eine Diode (D2) an einem Ausgangsanschluß- und auf der anderen Seite an dem anderen Ausgangsanschluß der Stromversorgungseinrichtung angeschlossen ist, wobei ferner die Hauptkondensatoreinrichtung (C1) auf einer Seite über eine erste Schalteinrichtung (Tr2) und über eine Diode (D1) an dem einen Ausgangsanschluß- und auf der anderen Seite an dem anderen Ausgangsanschluß angeschlossen ist, und wobei die erste Schalteinrichtung (Tr2) einen elektrisch steuerbaren Eingang zur Verbindung der einen Seite der Hauptkondensatoreinrichtung (C1) mit der Diode (D1) oder zur Trennung der einen Seite der Hauptkondensatoreinrichtung (C1) von der Diode (D1) aufweist,
   - ein erstes Widerstandsmittel (R2), das an dem Eingang der ersten Schalteinrichtung (Tr2) angeschlossen ist, um die Schalteinrichtung (Tr2) so einzustellen, daß sie ausgeschaltet ist,
   - eine zweite Schalteinrichtung (Tr1), die zwischen der einen Seite der Hauptkondensatoreinrichtung (C1) und der einen Seite der Starterkondensatoreinrichtung (C2) geschaltet ist, wobei die zweite Schalteinrichtung (Tr1) einen elektrisch steuerbaren Eingang zur Verbindung oder Trennung der einen Seiten der Kondensatoreinrichtungen (C1, C2) aufweist,
   - eine logische Schaltung, die von der Spannung der Starterkondensatoreinrichtung (C2) betrieben wird, um logische Signale zum Ein- und Ausschalten der Schalteinrichtungen an die Eingänge (A, B) abzugeben, und
   - ein zweites Widerstandsmittel (R1), das an dem Eingang der zweiten Schalteinrichtung (Tr1) angeschlossen ist, um die Schalteinrichtung (Tr1) so einzustellen, daß sie ausgeschaltet ist, dadurch gekennzeichnet,
   daß das erste Widerstandsmittel (R2) unmittelbar an dem einen Ausgangsanschluß der Stromversorgungseinrichtung angeschlossen ist und daß das zweite Widerstandsmittel (R1) unmittelbar an dem einen Ausgangsanschluß der Stromversorgungseinrichtung angeschlossen ist.

2. Schaltung nach Anspruch 1, wobei die Stromversorgungseinrichtung eine Solarzelleneinrichtung ist.

3. Schaltung nach Anspruch 1, wobei die Stromversorgungseinrichtung ein manuell betriebener Generator ist.

4. Schaltung nach wenigstens einem der vorhergehenden Ansprüche, wobei die erste Schalteinrichtung (Tr2) ein MOSFET ist.

5. Schaltung nach Anspruch 1, wobei die zweite Schalteinrichtung (Tr1) ein MOSFET ist.

**Revendications**

1. Un circuit de charge de condensateurs comprenant des moyens d'alimentation ayant deux bornes de sortie, au moins un condensateur principal (C1) destiné à emmagasiner une charge électrique provenant des moyens d'alimentation, un condensateur de démarrage (C2), ayant une capacité inférieure à celle du condensateur principal (C1), et destiné à emmagasiner une charge électrique provenant des moyens d'alimentation, un premier côté du condensateur de démarrage (C2) étant connecté par l'intermédiaire d'une diode (D2) à une première borne de sortie des moyens d'alimentation, tandis que son second côté est connecté à la seconde borne de sortie, un premier côté du condensateur principal (C1) étant connecté à la première borne de sortie par l'intermédiaire de premiers moyens de commutation (Tr2) et d'une diode (D1), tandis que son second côté est connecté à la seconde borne de sortie, les premiers moyens de commutation (Tr2) ayant une entrée pouvant être commandée électriquement pour connecter le premier côté du condensateur principal (C1) à la diode (D1), ou pour le déconnecter de cette dernière, une première résistance (R2) connectée à l'entrée des premiers moyens de commutation (Tr2) pour faire passer les moyens de commutation (Tr2) à l'état bloqué, des seconds moyens de commutation (Tr1) connectés entre le premier côté du condensateur principal (C1) et le premier côté du condensateur de démarrage (C2), les seconds moyens de commutation (Tr1) ayant une entrée pouvant être commandée électriquement, pour connecter ou déconnecter les premiers côtés des condensateurs (C1, C2), un circuit logique fonctionnant sur la tension du condensateur de démarrage (C2) pour appliquer des signaux logiques aux entrées (A, B), afin de bloquer et de débloquer les moyens de commutation, et une seconde résistance (R1) connectée à l'entrée des seconds moyens de commutation (Tr1) pour faire passer les moyens de comutation (Tr1) à l'état bloqué, caractérisé en ce que la première résistance (R2) est directement connectée à la première borne de sortie des moyens d'alimentation, et en ce que la seconde résistance (R1) est directement connectée à la première borne de sortie des moyens d'alimentation.

2. Un circuit selon la revendication 1, dans lequel les moyens d'alimentation sont constitués par des moyens à cellules solaires.

3. Un circuit selon la revendication 1, dans lequel les moyens d'alimentation sont constitués par un générateur actionné manuellement.

4. Un circuit selon l'une quelconque des revendications précédentes, dans lequel les premiers moyens de commutation (Tr2) sont constitués par un transistor à effet de champ MOS.

5. Un circuit selon la revendication 1, caractérisé en ce que les seconds moyens de commutation (Tr1) sont constitués par un transistor à effet de champ MOS.

# FIG.1

F I G. 2

# F I G. 3

(a)

(b)

(c)

EP 0 237 308 B1

F I G. 4